# EUROPÄISCHE PATENTANMELDUNG

(11) **EP 4 191 982 A1**
(43) Veröffentlichungstag der Anmeldung: **07.06.2023**
(21) Anmeldenummer: 21211562.0
(22) Anmeldetag: 01.12.2021
(51) Int. Cl.: H04L 67/55, H04L 67/12, B25F 5/00

(54) **SYSTEM UND VERFAHREN ZUM REGELMÄSSIGEN AUSTAUSCH VON DATEN ZWISCHEN ZWEI KOMMUNIKATIONSPARTNERN, SOWIE WERKZEUGMASCHINE MIT EINEM SOLCHEN SYSTEM**

(71) Anmelder: Hilti Aktiengesellschaft, 9494 Schaan (LI)
(72) Erfinder: Koscheck, David, 86899 Landsberg (DE); Hauser, Klaus, 86830 Schwabmünchen (DE); Mayer, Stefan, 86857 Hurlach (DE); Beckert, Benedikt, 86830 Schwabmünchen (DE)
(74) Vertreter: Hilti Aktiengesellschaft Corporate Intellectual Property

(57) **Zusammenfassung**

Die vorliegende Erfindung betrifft ein System zum regelmäßigen Austausch von Daten zwischen einem ersten Kommunikationspartner und einem zweiten Kommunikationspartner, wobei der erste Kommunikationspartner dazu ausgebildet ist, einmalig eine Anfrage in Bezug auf eine bestimmte Information an den zweiten Kommunikationspartner zu senden, wobei der zweite Kommunikationspartner durch die Anfrage veranlasst wird, die bestimmte Information und regelmäßige Aktualisierungen dieser bestimmten Information an den ersten Kommunikationspartner zu senden. Diese Übermittlung der Aktualisierungen der bestimmten Information erfolgt vorteilhafterweise ohne, dass der erste Kommunikationspartner eine neue Anfrage an den zweiten Kommunikationspartner stellen muss. In weiteren Aspekten betrifft die Erfindung ein System zum regelmäßigen Austausch von Daten zwischen zwei Kommunikationspartnern und eine Werkzeugmaschine mit einer Komponente, wobei die Kommunikationspartner separate elektronische Baugruppen oder Steuervorrichtungen innerhalb der Werkzeugmaschine und/oder ihrer Komponenten, wie einer Energieversorgungsvorrichtung, sein können.

## Beschreibung

Die vorliegende Erfindung betrifft ein System zum regelmäßigen Austausch von Daten zwischen einem ersten Kommunikationspartner und einem zweiten Kommunikationspartner, wobei der erste Kommunikationspartner dazu ausgebildet ist, einmalig eine Anfrage in Bezug auf eine bestimmte Information an den zweiten Kommunikationspartner zu senden, wobei der zweite Kommunikationspartner durch die Anfrage veranlasst wird, die bestimmte Information und regelmäßige Aktualisierungen dieser bestimmten Information an den ersten Kommunikationspartner zu senden. Diese Übermittlung der Aktualisierungen der bestimmten Information erfolgt vorteilhafterweise ohne, dass der erste Kommunikationspartner eine neue Anfrage an den zweiten Kommunikationspartner stellen muss. In weiteren Aspekten betrifft die Erfindung ein System zum regelmäßigen Austausch von Daten zwischen zwei Kommunikationspartnern und eine Werkzeugmaschine mit einer Komponente, wobei die Kommunikationspartner separate elektronische Baugruppen oder Steuervorrichtungen innerhalb der Werkzeugmaschine und/oder ihrer Komponenten, wie einer Energieversorgungsvorrichtung, sein können.

### Hintergrund der Erfindung:

Im Bereich der Werkzeugmaschine kann es gewünscht sein, dass zwischen der Werkzeugmaschine und ihren Komponenten Informationen ausgetauscht werden. Beispielsweise kann es wünschenswert sein, dass Informationen zwischen der Werkzeugmaschine selbst und einer Komponente, wie einer Energieversorgungsvorrichtung, ausgetauscht werden. Im Stand der Technik sind dazu Verfahren bekannt, bei denen Informationen innerhalb der Werkzeugmaschine auf Anfrage von einer Stelle an eine andere Stelle versendet werden. Das bedeutet, dass stets eine Anfrage von einem Kommunikationspartner an den anderen Kommunikationspartner gesendet werden muss, um eine Antwort zu erhalten. Dieses aus dem Stand der Technik bekannte Vorgehen ist mit dem Nachteil verbunden, dass große Datenströme erzeugt werden und dass die Kommunikation zwischen den beteiligten Stellen aufwändig und fehleranfällig sein kann. Die durch den anfragebasierten Informationsaustausch hervorgerufenen großen Datenströme können nachteiligerweise dazu führen, dass die zu übertragende Datenmenge stetig ansteigt, so dass innerhalb einer Werkzeugmaschine Kommunikationskanäle mit höherer Datenübertragungsrate bereitgestellt werden müssen, um mit den Kommunikations- und Datenübertragungsanforderungen Schritt zu halten. Dadurch kann beispielsweise ein Platzbedarf des werkzeugmaschinen-internen Kommunikationssystems anwachsen oder die Anforderungen an Kühlung und/oder Zugänglichkeit des Kommunikationssystems. Diese erhöhten technischen Anforderungen an das Kommunikationssystem und die Werkzeugmaschine stehen aber dem grundsätzlichen Interesse bei der Geräte-Entwicklung entgegen, vor allem im Bereich der Werkzeugmaschine, bei denen Arbeite zum Teil über sehr lange Zeiträume mit den Geräten arbeiten, leichte, kompakte und handliche Werkzeugmaschine bereitzustellen.

Die Aufgabe, die der vorliegenden Erfindung zugrunde liegt, besteht darin, die vorstehend beschriebenen Mängel und Nachteile des Standes der Technik zu überwinden und ein System und ein Verfahren zum regelmäßigen Austausch von Daten zwischen zwei Kommunikationspartnern, sowie eine Werkzeugmaschine bereitzustellen, wobei die zu übertragende Datenmenge im Vergleich zu konventionellen Verfahren, wie sie aus dem Stand der Technik bekannt sind, reduziert werden soll. Die Fachwelt würde es darüber hinaus begrüßen, wenn mit der Erfindung leichte, kompakte und handliche Werkzeugmaschinen bereitgestellt werden könnten, wenn die Erfindung im Bereich der Werkzeugmaschine eingesetzt wird.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System zum regelmäßigen Austausch von Daten zwischen einem ersten Kommunikationspartner und einem zweiten Kommunikationspartner vorgesehen. Der erste Kommunikationspartner ist dazu ausgebildet, einmalig eine Anfrage in Bezug auf eine bestimmte Information an den zweiten Kommunikationspartner zu senden, wobei der zweite Kommunikationspartner durch die Anfrage veranlasst wird, die bestimmte Information und regelmäßige Aktualisierungen dieser bestimmten Information an den ersten Kommunikationspartner zu senden. Mit dem vorgeschlagenen System kann es vorteilhafterweise ermöglicht werden, dass bestimme Informationen und ihre Aktualisierungen von dem zweiten Kommunikationspartner an den ersten Kommunikationspartner gesendet werden, ohne dass eine erneute oder regelmäßige Anfrage des ersten Kommunikationspartners an den zweiten Kommunikationspartner erforderlich ist. Es ist im Sinne der Erfindung bevorzugt, dass eine einmalige Anfrage des ersten Kommunikationspartners an den zweiten Kommunikationspartner ausreicht, um den zweiten Kommunikationspartner zu veranlassen, sowohl die bestimmte Information, als auch ihre Aktualisierungen an den anfragenden ersten Kommunikationspartner zu senden. Der Begriff «bestimmte Information» ist im Sinne der Erfindung vorzugsweise als konkrete Information zu verstehen, beispielsweise als aktueller Meßwert, Zustand und/oder Betriebsparameter einer Werkzeugmaschine oder einer ihrer Komponenten. Der Begriff «bestimmte Information» kann aber auch als Platzhalter für einen bestimmten Typ von Informationen stehen bzw. für Informationen zu einer bestimmten physikalischen Größe, die regelmäßig von dem zweiten Kommunikationspartner an den ersten Kommunikationspartner übermittelt werden soll. Wenn der erste Kommunikationspartner beispielsweise eine Werkzeugmaschine ist und der zweite Kommunikationspartner eine Energieversorgungsvorrichtung der Werkzeugmaschine, kann ein Bedürfnis des ersten Kommunikationspartners - hier der Werkzeugmaschine - bestehen, regelmäßig über den Ladestand der Energieversorgungsvorrichtung - hier dem zweite Kommunikationspartner - unterrichtet zu werden. Gemäß einem Ausführungsbeispiel der Erfindung schickt die Werkzeugmaschine als erster Kommunikationspartner einmalig eine Anfrage an die Energieversorgungsvorrichtung als zweiten Kommunikationspartner. Die Energieversorgungsvorrichtung wird dann erfindungsgemäß dazu veranlasst, die bestimmte Information - hier den aktuellen Ladezustand - an die Werkzeugmaschine zu senden. Die Übermittlung der einmaligen Anfrage durch den ersten Kommunikationspartner an den zweiten Kommunikationspartner führt aber vorteilhafterweise auch dazu, dass im Folgenden regelmäßig aktualisierte Ladezustände der Energieversorgungsvorrichtung an die Werkzeugmaschine übermittelt werden. Diese vorzugsweise aktualisierten Ladezustände der Energieversorgungsvorrichtung werden im Sinne der Erfindung bevorzugt als «Aktualisierungen der bestimmten Information» bezeichnet.

Wie aus dem Ausführungsbeispiel der Erfindung hervorgeht, kommt das vorgeschlagene Kommunikationssystem mit einer einmaligen Anfrage des ersten Kommunikationspartners an den zweiten Kommunikationspartner aus, um einen regelmäßigen Austausch von Daten und bestimmten Informationen, sowie ihrer Aktualisierungen zu bewirken. Das Verfahren ist vergleichbar mit einem Daten-Abonnement, welches der erste Kommunikationspartner bei dem zweiten Kommunikationspartner durch die Übermittlung der einmaligen Anfrage «bestellt». Durch die einmalige Anfrage wird der erste Kommunikationspartner von dem zweiten Kommunikationspartner in Bezugs auf eine bestimmte Information auf dem Laufenden gehalten, dies insbesondere dadurch, dass regelmäßig aktualisierte Daten zu der bestimmten Information von dem zweiten Kommunikationspartner an den ersten Kommunikationspartner übermittelt werden.

Die Erfindung leistet dadurch einen wesentlichen Beitrag, um eine in einem Kommunikationssystem zu übertragende Datenmenge erheblich zu reduzieren. Denn das vorgeschlagene System kommt vorteilhafterweise ohne ein stetes neues Anfragen und/oder Erfragen von Informationen aus. Vielmehr ermöglicht die Erfindung eine besonders schlanke und datensparende Kommunikation zwischen mindestens zwei Kommunikationspartnern, beispielsweise in einem System, wie einer Werkzeugmaschine. Auf diese Weise können beteiligte Bauteile klein und kompakt gehalten werden und auf aufwändige Kühlmaßnahmen verzichtet werden. Dadurch kann die Erfindung einen Beitrag dazu leisten, dass Werkzeugmaschinen leicht, kompakt und handlich ausgebildet sein können.

Es ist mit der Erfindung insbesondere nicht mehr erforderlich, dass ein anfragender Kommunikationspartner einen informationsgebenden Kommunikationspartner regelmäßig durch Übermitteln einer Datenanfrage um die Übermittlung von Informationen «bitten» muss. Im Stand der Technik wurden dazu häufig Anfragetelegramme an den datenbereitstellenden Kommunikationspartner eingesetzt, auf die nun mit der Erfindung vorteilhafterweise verzichtet werden kann. Es ist im Sinne der Erfindung bevorzugt, dass der anfragende Kommunikationspartner als «Consumer» bezeichnet wird, während der datenbereitstellende Kommunikationspartner als «Producer» bezeichnet wird. Vorzugsweise kann der erste Kommunikationspartner innerhalb des Systems als «Consumer» fungieren und der zweite Kommunikationspartner als «Producer». Mit der Erfindung kann das Abonnieren bestimmter Informationen durch den ersten Kommunikationspartner ermöglicht werden, wobei das Abonnement vorzugsweise durch die einmalige Anfrage des ersten Kommunikationspartners an den zweiten Kommunikationspartner zustande kommt. In der Folge wird der zweite Kommunikationspartner dazu veranlasst, die bestimmte Information und ihre Aktualisierungen in regelmäßigen Abständen an den ersten Kommunikationspartner zu übermitteln.

Insbesondere ermöglicht das vorgeschlagene System den regelmäßigen Austausch von Daten zwischen zwei Kommunikationspartnern, wobei es sich bei den Daten beispielsweise um Betriebszustände, Betriebsparameter, Messwerte oder dergleichen handeln kann. Diese Informationen und ihre Aktualisierungen können mit der Erfindung regelmäßig und/oder in kurzen zeitlichen Abständen zwischen den Kommunikationspartnern übermittelt werden. Typische zeitliche Abstände können beispielsweise in einem Bereich von 1 ms bis 10 s liegen. Die zeitlichen Abstände werden im Sinne der Erfindung bevorzugt auch als «Wiederholungsrate» bezeichnet. Tests haben ergeben, dass Wiederholungsraten in einem Bereich von ca. 10 ms oder ca. 50 ms besonders gut geeignet sind, um die zu übertragende Datenmenge erheblich zu reduzieren. Bei langsam veränderlichen Größen, wie Temperaturdaten, die mit Hilfe des vorgeschlagenen Daten-Abonnements übertragen werden sollen, kann auch eine Wiederholungsrate von ca. 1 s bevorzugt sein. Bei Wiederholungsraten von mehr als 10 s wird praktisch keine Datenübertragungsersparnis mehr realisiert. Es kann im Sinne der Erfindung bevorzugt sein, dass bei Abschluss des Abonnements die Wiederholungsrate mit vorgegeben oder festgelegt wird. Mit anderen Worten kann die Wiederholungsrate in der einmaligen Anfrage des einen Kommunikationspartners enthalten sein oder beispielsweise in einer Antwort des anderen Kommunikationspartners. Alternativ oder ergänzend kann das Senden von Informationen auch ereignisbasiert (event-basiert) erfolgen bzw. ausgelöst werden. Beispielsweise kann ein (aktualisierter) Temperaturwert immer dann gesendet werden, wenn sich der Temperaturwert um mehr als 3 °C oder um mehr als 10 % im Vergleich zu einem Vorgänger- oder Referenzwert verändert hat.

Insbesondere können mit der Erfindung vorteilhafterweise sich zeitlich verändernde Daten besonders gut zwischen den beteiligten Kommunikationspartnern ausgetauscht werden. Denn die Erfindung bietet gerade dafür eine technische Lösung, indem bestimmte Informationen und ihre Aktualisierungen in regelmäßigen Abständen und/oder in kurzen zeitlichen Abständen zwischen zwei Kommunikationspartnern ausgetauscht werden. Dadurch wird der erste Kommunikationspartner in Bezug auf die bestimmte Information - beispielsweise eine Ladezustand eines Akkus oder einer Batterie als Energieversorgungsvorrichtung - stets auf dem neuesten Stand gehalten und der erste Kommunikationspartner «kennt» den aktuellen Wert oder Stand einer bestimmten Information.

Es ist im Sinne der Erfindung bevorzugt, dass die Aktualisierungen der bestimmten Information bei Eintritt mindestens einen Eintrittsereignisses gesendet werden. Vorzugsweise kann das Eintrittsereignis in der einmaligen Anfrage enthalten sein. Vorteilhafterweise kann die einmalige Anfrage mindestens ein Eintrittsereignis umfassen, wobei mit dem Eintrittsereignis festgelegt wird, wann genau die bestimmte Information und ihre Aktualisierungen von dem zweiten an den ersten Kommunikationspartner gesendet werden sollen. Mit anderen Worten kann mit der einmaligen Anfrage ein Regelwerk mit Eintrittsereignissen. definiert werden, mit dem festgelegt wird, wann bestimmte Informationen und ihre Aktualisierungen von dem zweiten and den ersten Kommunikationspartner gesendet werden. Dabei kann es bevorzugt, sein, dass stets dasselbe Eintrittsereignis für einen bestimmten Datentyp oder eine bestimmte Information verwendet wird. Es kann aber im Sinne der Erfindung auch bevorzugt sein, dass sich die Eintrittsereignisse unterscheiden.

Bei dem Eintrittsereignis kann es sich beispielsweise um das Verstreichen einer definierten bzw. zuvor festgelegten Zeitdauer handeln. Es kann im Sinne der Erfindung auch bevorzugt sein, dass die Übermittlung der bestimmten Information oder ihrer Aktualisierungen an eine Änderung einer physikalischen Größe, eines Zustands und/oder eines Betriebsparameters als Eintrittsereignis geknüpft wird. Die physikalische Größe, der Zustand und/oder der Betriebsparameter können sich beispielsweise um einen zuvor festgelegten absoluten Wert oder um einen relativen Wert, d.h. ein Verhältnis, ändern. Das Eintrittsereignis stellt vorzugsweise ein auslösendes Ereignis dar, wobei dieses auslösende Ereignis den zweiten Kommunikationspartner dazu veranlasst, die bestimmte Information oder ihre Aktualisierung an den ersten Kommunikationspartner zu übermitteln.

Es stellt einen wesentlichen Vorteil der Erfindung dar, dass die Aktualisierungen der bestimmten Information vom zweiten an den ersten Kommunikationspartner gesendet werden, ohne dass der erste Kommunikationspartner eine neue Anfrage an den zweiten Kommunikationspartner senden muss. Vielmehr funktioniert die Erfindung im Sinne eines Abonnements, wobei der erste Kommunikationspartner ein Abonnement auf die bestimmte Information und ihre regelmäßigen Aktualisierungen hat, die bei Eintritt eines Eintrittsereignisses von dem zweiten Kommunikationspartner an den ersten Kommunikationspartner gesendet werden.

Es ist im Sinne der Erfindung bevorzugt, dass die Kommunikationspartner separate elektronische Baugruppen in einer Werkzeugmaschine sind. In einer bevorzugten Ausgestaltung der Erfindung können die Kommunikationspartner elektronische Steuervorrichtungen der Werkzeugmaschine und/oder einer Komponente der Werkzeugmaschine sein. Beispielsweise kann der erste Kommunikationspartner von einer Steuervorrichtung der Werkzeugmaschine gebildet werden oder eine solche umfassen, während der zweite Kommunikationspartner von einer Steuervorrichtung einer Energieversorgungsvorrichtung der Werkzeugmaschine gebildet wird oder eine solche umfasst. Die Zuordnung kann aber auch ebenso gut andersherum sein, so dass der erste Kommunikationspartner von einer Steuervorrichtung der Energieversorgungsvorrichtung oder einer anderen Komponente der Werkzeugmaschine gebildet wird, während der zweite Kommunikationspartner von einer Steuervorrichtung der Werkzeugmaschine gebildet wird. Die Energieversorgungsvorrichtung kann beispielsweise eine aufladbare Batterie oder einen Akkumulator («Akku») umfassen und die Werkzeugmaschine mit elektrischer Energie versorgen. Die Energieversorgungsvorrichtung kann vorzugsweise lösbar mit der Werkzeugmaschine verbunden sein, so dass sie elektrische Energie an die Werkzeugmaschine abgeben kann, wenn Werkzeugmaschine und Energieversorgungsvorrichtung miteinander verbunden sind. Es ist im Sinne der Erfindung bevorzugt, dass die Steuervorrichtung der Energieversorgungsvorrichtung und/oder der Werkzeugmaschine elektronische Baugruppen darstellen, die beispielsweise dadurch voneinander getrennt, d.h. separat, vorliegen können, dass sie an unterschiedlichen Komponenten oder der Werkzeugmaschine selbst angeordnet vorliegen. Die Werkzeugmaschine und die Energieversorgungsvorrichtung können vorzugsweise ein System bilden, wobei die Kommunikationspartner des vorgeschlagenen Kommunikationssystems Bestandteile der Werkzeugmaschine und der Energieversorgungsvorrichtung bilden. Das System stellt vorzugsweise ein verteiltes System mit mindestens zwei Kommunikationspartnern dar, wobei die Kommunikationspartner vorzugsweise zu unterschiedlichen Bestandteilen des Systems gehören können. Mit der einmaligen Anfrage, die von dem ersten Kommunikationspartner an den zweiten Kommunikationspartner gesendet wird, können vorteilhafterweise Regeln aufgestellt und/oder Ereignisse definiert werden, nach denen ein Datenaustausch zwischen den Kommunikationspartnern innerhalb des Systems erfolgt. Dabei werden bestimmte Informationen und ihre Aktualisierungen insbesondere nach Auftreten eines Eintrittsereignisses von dem zweiten an den ersten Kommunikationspartner übermittelt. Das Eintrittsereignis kann für die Übermittlung einer ersten, zweiten oder dritten, sowie jeden weiteren Aktualisierung der bestimmten Information dasselbe sein. Es kann aber im Sinne der Erfindung auch bevorzugt sein, dass die Übermittlungen der Aktualisierungen von unterschiedlichen Eintrittsereignissen ausgelöst wird. Beispielsweise kann mit der einmaligen Anfrage festgelegt werden, dass die bestimmte Information von dem ersten an den zweiten Kommunikationspartner versendet wird, wenn der Wert eines Betriebsparameters bei 100 % liegt, wobei die erste, zweite, dritte oder n-te Aktualisierung der bestimmten Information von dem ersten an den zweiten Kommunikationspartner versendet wird, wenn der Wert des Betriebsparameters beispielsweise bei 110 %, 120 %, 130 % oder (100 + n * 10) % liegt. Mithin besteht bei der Formulierung der einmaligen Anfrage eine große Freiheit und Flexibilität für die Ausgestaltung der Regeln und/oder der Festlegung der Eintrittsereignisse für den Versand der bestimmten Information und ihrer Aktualisierungen.

Es ist im Sinne der Erfindung bevorzugt, dass das System eine Kommunikationsschnittstelle zum Austausch der Daten zwischen den Kommunikationspartnern umfasst. Dabei kann die Kommunikationsschnittstelle kabelgebunden oder kabellos arbeiten. Mit anderen Worten kann die Kommunikation zwischen den Kommunikationspartnern kabelgebunden und/oder kabellos erfolgen. Beispielsweise können die beteiligten Kommunikationspartnern über Kommunikationsleitungen miteinander verbunden sein, so dass die Kommunikationspartner Daten über diese drahtgebundene Kommunikationsverbindungen austauschen können. Es kann aber im Sinne der Erfindung ebenso gut bevorzugt sein, dass die Kommunikation zwischen den Kommunikationspartnern drahtlos erfolgt, also beispielsweise auf WLAN, bluetooth, Zigbee und/oder Funk beruht, ohne darauf beschränkt zu sein.

Es ist im Sinne der Erfindung bevorzugt, dass der erste Kommunikationspartner ein erstes Kommunikationsmodul aufweist und der zweite Kommunikationspartner ein zweites Kommunikationsmodul. Vorzugsweise können die Kommunikationsmodule der Kommunikationspartner zusammen die Kommunikationsschnittstelle des Kommunikationssystems bilden. Vorzugsweise können die Kommunikationsmodule der Kommunikationspartner physisch miteinander verbunden vorliegen, um eine Kommunikation zwischen dem ersten Kommunikationspartner und dem zweiten Kommunikationspartner zu ermöglichen. Diese Verbindung kann beispielsweise von Kommunikationsleitungen gebildet werden. Es kann im Sinne der Erfindung auch bevorzugt sein, dass die Kommunikationsmodule der Kommunikationspartner nicht physisch, sondern mit Hilfe einer drahtlosen Kommunikationsverbindung miteinander verbunden sind und auf diese Weise eine Kommunikationsschnittstelle innerhalb des vorgeschlagenen Kommunikationssystems bilden, so dass ein Kommunikation zwischen den Kommunikationspartnern des Systems ermöglicht wird.

In einem zweiten Aspekt betrifft die Erfindung eine Werkzeugmaschine mit einer Komponente. In einer besonders bevorzugten Ausführungsform der Erfindung ist diese Komponente eine Energieversorgungsvorrichtung zur Versorgung der Werkzeugmaschine mit elektrischer Energie. Die für das Kommunikationssystem eingeführten Begriffe, Definitionen und technischen Vorteile gelten vorzugsweise für die Werkzeugmaschine und das später beschriebene Kommunikationsverfahren analog, und umgekehrt. Die Werkzeugmaschine stellt insbesondere eine akku- oder batteriebetriebene Werkzeugmaschine dar, die ihre elektrische Betriebsenergie von einer Energieversorgungseinrichtung, wie einer Batterie oder einem Akku bezieht. Die Werkzeugmaschine weist einen ersten Kommunikationspartner auf und die Energieversorgungsvorrichtung einen zweiten Kommunikationspartner, wobei die Kommunikationspartner dazu ausgebildet sind, bei Eintritt eines Eintrittsereignisses bestimmte Informationen und regelmäßige Aktualisierungen der bestimmten Informationen auszutauschen, wenn zuvor einmalig eine Anfrage von dem ersten Kommunikationspartner an den zweiten Kommunikationspartner gesendet wurde. Mit anderen Worten weisen die Energieversorgungsvorrichtung und die Werkzeugmaschine je einen Kommunikationspartner auf, wobei die Kommunikationspartner dazu eingerichtet sind, basierend auf einer einmaligen Anfrage des ersten Kommunikationspartners an den zweiten Kommunikationspartner bestimmte Informationen und ihre Aktualisierungen von dem zweiten Kommunikationspartner an den ersten Kommunikationspartner zu senden. Der Versand der einmaligen Anfrage und der Versand der bestimmten Information und ihrer Aktualisierungen wird im Sinne der Erfindung als Datenaustausch zwischen den Kommunikationspartnern bezeichnet, wobei die einmalige Anfrage einmalig zwischen den Kommunikationspartnern ausgetauscht wird und die bestimmten Informationen und ihre Aktualisierungen vorzugsweise regelmäßig wiederkehrend übermittelt bzw. aktualisiert werden.

In einem weiteren Aspekt betrifft die Erfindung ein Verfahren zum regelmäßigen Austausch von Daten zwischen einem ersten Kommunikationspartner und einem zweiten Kommunikationspartner in einer Werkzeugmaschine. Das Kommunikationsverfahren ist durch folgende Verfahrensschritte gekennzeichnet:
a) einmalige Anfrage des ersten Kommunikationspartners an den zweiten Kommunikationspartner,
b) Übermittlung einer bestimmten Information von dem zweiten Kommunikationspartner an den ersten Kommunikationspartner,
c) Übermittlung einer Aktualisierung der bestimmten Information von dem zweiten Kommunikationspartner an den ersten Kommunikationspartner bei Eintritt eines Eintrittsereignisses.

Vorzugsweise umfasst die einmalige Anfrage das mindestens eine Eintrittsereignis. Es ist im Sinne der Erfindung bevorzugt, dass die Kommunikationspartner elektronische Steuervorrichtungen der Werkzeugmaschine und/oder einer Komponente, insbesondere einer Energieversorgungsvorrichtung, der Werkzeugmaschine sind. Die bestimmte Information kann erstmalig direkt nach Erhalt der einmaligen Anfrage von dem zweiten Kommunikationspartner an den ersten Kommunikationspartner gesendet werden. In diesem Fall stellt der Erhalt der einmaligen Anfrage das Eintrittsereignis für die Übermittlung der bestimmten Information von dem zweiten Kommunikationspartner an den ersten Kommunikationspartner dar. Es kann aber im Sinne der Erfindung auch bevorzugt sein, dass die bestimmte Information erstmalig von dem zweiten Kommunikationspartner an den ersten Kommunikationspartner übermittelt wird, wenn ein entsprechendes Eintrittsereignis eintritt, wobei das Eintrittsereignis in der einmaligen Anfrage enthalten ist bzw. darin definiert wird.

Durch die Erfindung ergibt sich überraschenderweise eine Einsparung bei der zu übertragenden Datenmenge in mehrfacher Hinsicht. Zum einen ergibt sich eine Einsparung dadurch, dass die Übertragung von aktuellen und aktualisierten Daten im Kontext der vorliegenden Erfindung vorzugsweise unidirektional von dem zweiten Kommunikationspartner an den ersten Kommunikationspartner erfolgt, vorteilhafterweise ohne, dass der erste Kommunikationspartner zuvor eine erneute Anfrage an den zweiten Kommunikationspartner stellen muss. Mit anderen Worten ergibt sich eine erste Einsparung der zu übertragenden Datenmenge daraus, dass die Übertragung von Daten unidirektional von dem Producer an den Consumer erfolgt, ohne, dass der Consumer zuvor eine erneute Anfrage an den Producer stellen muss. Zum anderen kann durch die Erfindung und der Vorsehung der einmaligen Anfrage eine regelmäßige, zyklische Abfrage von Daten an den zweiten Kommunikationspartner durch den ersten Kommunikationspartner entfallen, da hier die Erfindung eine Automatisierung im Sinne eines Abonnements ermöglicht. Somit entfällt ein Hin und Her von Anfrage- und Antworttelegrammen, wie es bisher im Stand der Technik Usus war. Stattdessen wird eine einmalige Anfrage eines ersten Kommunikationspartners («Consumers») an einen zweiten Kommunikationspartner («Producer») vorgeschlagen, so dass der zweite Kommunikationspartner regelmäßig aktualisierte Daten in Bezug auf eine bestimmte Information an den ersten Kommunikationspartner sendet, ohne dass dieser jedes Mal erneut eine Anfrage bzw. ein Anfragetelegramm versenden muss.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: schematische Ansicht einer bevorzugten Ausgestaltung des Kommunikationssystems
- Fig. 2: schematische Ansicht einer bevorzugten Ausgestaltung einer Werkzeugmaschine und einer Energieversorgungsvorrichtung

### Ausführungsbeispiele und Figurenbeschreibung:

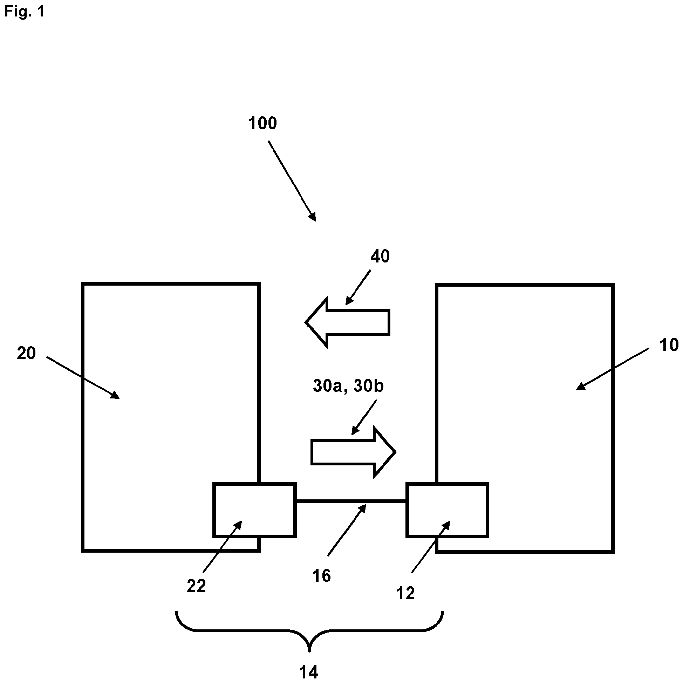

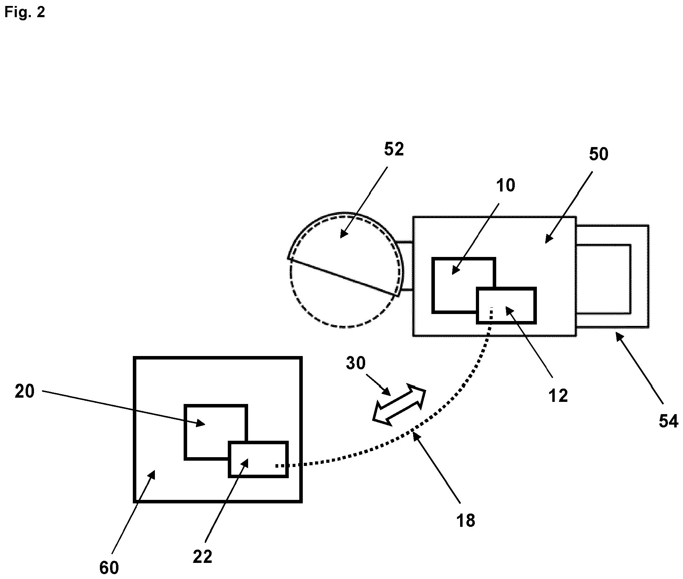

Figur 1 zeigt eine schematische Ansicht einer bevorzugten Ausgestaltung des Kommunikationssystems 100. Dargestellt ist ein erster Kommunikationspartner 10 und ein zweiter Kommunikationspartner 20, wobei der erste Kommunikationspartner 10 ein erstes Kommunikationsmodul 12 und der zweite Kommunikationspartner 20 ein zweites Kommunikationsmodul 22 aufweist. Der erste Kommunikationspartner 10 und der zweite Kommunikationspartner 20 bilden das vorgeschlagene System 100, das im Sinne der Erfindung bevorzugt auch als Kommunikationssystem 100 bezeichnet wird. Vorzugsweise besteht zwischen den Kommunikationspartnern 10, 20 eine Kommunikationsverbindung 18 (siehe Fig. 2), die drahtgebunden, wie in Fig. 1, und drahtlos, wie in Fig. 2, ausgebildet sein kann. Wenn die Kommunikationsverbindung 18 drahtgebunden ausgebildet ist, kann die Kommunikationsverbindung 18 beispielsweise Kommunikationsleitungen 16, wie Kabel oder dergleichen, umfassen oder aus ihnen gebildet sein. Die Kommunikationsmodule 12, 22 können eine Kommunikationsschnittstelle 14 bilden, die die Kommunikationsverbindung 18 zwischen den Kommunikationspartnern 10, 20 ermöglicht.

Der erste Kommunikationspartner 10 kann beispielsweise Bestandteil einer Werkzeugmaschine 50 sein, während der zweite Kommunikationspartner 20 beispielsweise Bestandteil einer Energieversorgungsvorrichtung 60 einer Werkzeugmaschine 50 sein kann. Ein solches Ausführungsbeispiel der Erfindung ist in Fig. 2 dargestellt. Insbesondere können die Kommunikationspartner 10, 20 Steuervorrichtungen der Werkzeugmaschine 50 und ihrer Energieversorgungsvorrichtung 60 sein. Beispielsweise kann der erste Kommunikationspartner 10 Bestandteil einer Steuervorrichtung der Werkzeugmaschine 50 sein, während der zweite Kommunikationspartner 20 Bestandteil einer Steuervorrichtung der Energieversorgungsvorrichtung 60 der Werkzeugmaschine 50 sein kann. Selbstverständlich kann die Zuordnung auch genau anders herum sein oder die Energieversorgungsvorrichtung 60 kann durch eine andere Komponente der Werkzeugmaschine 50 ersetzt werden, mit der die Werkzeugmaschine 50 kommunizieren können soll.

In dem in Fig. 2 dargestellten Ausführungsbeispiel der Erfindung liegen die Werkzeugmaschine 50 und die Energieversorgungsvorrichtung 60 getrennt voneinander vor. Sie können aber miteinander verbunden werden, damit die Energieversorgungsvorrichtung 60 die Werkzeugmaschine 50 mit elektrischer Energie versorgen kann. Die Werkzeugmaschine 50 kann ein Werkzeug 52 zur Ausführung von Arbeiten mit der Werkzeugmaschine 50 umfassen, sowie eine Griff 54. Selbstverständlich kann die Werkzeugmaschine 50 weitere Komponenten, wie einen Motor, ein Getriebe oder eine Kühlung umfassen, die aber in Fig. 2 nicht im Einzelnen dargestellt sind. Das in Fig. 2 dargestellte Werkzeug 52 der Werkzeugmaschine 50 ist scheibenförmig ausgebildet, aber selbstverständlich kann die Werkzeugmaschine 50 auch andersartige Werkzeuge 52, wie Bohrer, Meißel, Bohrkronen oder dergleichen, umfassen.

Die in Fig. 2 dargestellte Kommunikationsverbindung 18 wird durch einen gestrichtelten Bogen dargestellt, der symbolisieren soll, dass es sich in dem gezeigten Ausführungsbeispiel der Erfindung um eine drahtlose Kommunikationsverbindung 18 zwischen dem ersten Kommunikationspartner 10 und dem zweiten Kommunikationspartner 20 handelt, wobei die Kommunikationsverbindung 18 vorzugsweise durch eine Kommunikationsschnittstelle 14 vermittelt werden kann (vgl. Fig. 1). Die Kommunikationsschnittstelle 14 kann dazu ein erstes Kommunikationsmodul 12 und ein zweites Kommunikationsmodul 22 umfassen, die Bestandteile der Kommunikationspartner 10, 20 oder der Werkzeugmaschine 50 und der Energieversorgungsvorrichtung 60 sein können. Die Energieversorgungsvorrichtung 60 kann im Sinne der Erfindung als Stellvertreter betrachtet werden für andere Komponenten, Zubehörteile oder Hilfsgeräte der Werkzeugmaschine 50, mit denen die Werkzeugmaschine 50 regelmäßig Daten 30 austauscht.

Es ist im Sinne der Erfindung bevorzugt, dass die Energieversorgungsvorrichtung 60 und die Werkzeugmaschine 50 je einen Kommunikationspartner 20, 10 aufweisen, wobei die Kommunikationspartner 20, 10 dazu ausgebildet sind, bei Eintritt eines Eintrittsereignisses bestimmte Informationen 30a und regelmäßige Aktualisierungen 30b der bestimmten Informationen 30a auszutauschen, wenn zuvor einmalig eine Anfrage 40 von dem ersten Kommunikationspartner 10 an den zweiten Kommunikationspartner 20 gesendet wurde. Insofern kann der Austausch von Daten 30 zwischen den Kommunikationspartnern 10, 20, insbesondere die Übermittlung der bestimmten Information 30a und ihrer Aktualisierungen 30b von dem zweiten Kommunikationspartner 20 an den ersten Kommunikationspartner 10, ähnlich zu einem Abonnement betrachtet werden, wobei im Rahmen des vorgeschlagenen Daten-Abonnements regelmäßig bestimmte Daten von dem zweiten Kommunikationspartner 20 an den ersten Kommunikationspartner 10 übermittelt werden, wenn zuvor eine einmalige Anfrage 40 von dem ersten Kommunikationspartner 10 an den zweiten Kommunikationspartner 20 gesendet wurde und die entsprechenden Voraussetzungen und Regeln für den Versand erfüllt sind. Die Voraussetzungen und Regeln können vorzugsweise Eintrittsereignisse definieren, die angeben, wann eine bestimmte Information 30a oder ihre Aktualisierung 30b von dem zweiten Kommunikationspartner 20 an den ersten Kommunikationspartner 10 gesendet werden soll.

Der regelmäßige Austausch von Daten 30 wird erfindungsgemäß durch die Übermittlung einer einmaligen Anfrage 40 des ersten Kommunikationspartners 10 an den zweiten Kommunikationspartner 20 initiiert. Die entsprechenden Vorgänge sind schematisch in Fig. 1 durch Pfeile angedeutet. Der zweite Kommunikationspartner 20 wird durch die einmalige Anfrage 40 des ersten Kommunikationspartners 10 dazu veranlasst, eine bestimmte Information 30a an den zweiten Kommunikationspartner 20 zu senden. Im Weiteren sendet der zweite Kommunikationspartner 20 auch Aktualisierungen 30b der bestimmten Information 30a an den ersten Kommunikationspartner 10, wenn ein Eintrittsereignis eintritt. Das Eintrittsereignis für den Versand der bestimmten Information 30a kann der Erhalt der einmaligen Anfrage 40 durch den zweiten Kommunikationspartner 20 sein. Das Eintrittsereignis für den Versand der bestimmten Information 30a kann aber auch von dem Erhalt der einmaligen Anfrage 40 abweichen und die entsprechende Information bzw. Voraussetzung dafür in der einmaligen Anfrage 40 enthalten sein. Das Eintrittsereignis kann Regeln und/oder Voraussetzungen für den Versand der bestimmten Information 30a und ihrer Aktualisierungen 30b enthalten und vorzugsweise in der einmaligen Anfrage 40 enthalten sein. Mit anderen Worten kann die einmalige Anfrage 40 Regeln und/oder Voraussetzungen für den Versand der bestimmten Information 30a und ihrer Aktualisierungen 30b enthalten, die von dem zweiten Kommunikationspartner 20 an den ersten Kommunikationspartner 10 versendet werden.

### Bezugszeichenliste

- 10: erster Kommunikationspartner
- 12: erstes Kommunikationsmodul
- 14: Kommunikationsschnittstelle
- 16: Kommunikationsleitung (drahtgebunden)
- 18: Kommunikationsverbindung (drahtlos)
- 20: zweiter Kommunikationspartner
- 22: zweites Kommunikationsmodul
- 30: Daten
- 30a: bestimmte Information
- 30b: Aktualisierungen der bestimmten Information
- 40: einmalige Anfrage
- 50: Werkzeugmaschine
- 52: Werkzeug der Werkzeugmaschine
- 54: Griff der Werkzeugmaschine
- 60: Komponente, insbesondere Energieversorgungsvorrichtung
- 100: System

## Patentansprüche

1. System (100) zum regelmäßigen Austausch von Daten (30) zwischen einem ersten Kommunikationspartner (10) und einem zweiten Kommunikationspartner (20) **dadurch gekennzeichnet, dass**
der erste Kommunikationspartner (10) dazu eingerichtet ist, einmalig eine Anfrage (40) in Bezug auf eine bestimmte Information (30a) an den zweiten Kommunikationspartner (20) zu senden, wobei der zweite Kommunikationspartner (20) durch die einmalige Anfrage (40) veranlasst wird, die bestimmte Information (30a) und regelmäßige Aktualisierungen (30b) dieser bestimmten Information (30a) an den ersten Kommunikationspartner (10) zu senden.

2. System (100) nach Anspruch 1
**dadurch gekennzeichnet, dass**
die Aktualisierungen (30b) der bestimmten Information (30a) bei Eintritt mindestens einen Eintrittsereignisses gesendet werden.

3. System (100) nach Anspruch 2
**dadurch gekennzeichnet, dass**
das Eintrittsereignis in der einmaligen Anfrage (40) enthalten ist.

4. System (100) nach einem der vorhergehenden Ansprüche
**dadurch gekennzeichnet, dass**
die Kommunikationspartner (10, 20) separate elektronische Baugruppen in einer Werkzeugmaschine (50) sind.

5. System (100) nach einem der vorhergehenden Ansprüche
**dadurch gekennzeichnet, dass**
die Kommunikationspartner (10, 20) elektronische Steuervorrichtungen der Werkzeugmaschine (50) und/oder einer Energieversorgungsvorrichtung (60) der Werkzeugmaschine (50) sind.

6. System (100) nach einem der vorhergehenden Ansprüche
**dadurch gekennzeichnet, dass**
das System (100) eine Kommunikationsschnittstelle (14) zum Austausch der Daten (30) zwischen den Kommunikationspartnern (10, 20) umfasst.

7. System (100) nach Anspruch 6
**dadurch gekennzeichnet, dass**
die Kommunikationsschnittstelle (14) kabelgebunden oder kabellos arbeitet.

8. System (100) nach Anspruch 6 oder 7
**dadurch gekennzeichnet, dass**
die die Kommunikationsschnittstelle (14) ein erstes Kommunikationsmodul (12) als Bestandteil des ersten Kommunikationspartners (10) und ein zweites Kommunikationsmodul (22) als Bestandteil des zweiten Kommunikationspartners (22) umfasst.

9. Werkzeugmaschine (50) mit einer Komponente (60)
**dadurch gekennzeichnet, dass**
die Werkzeugmaschine (50) einen ersten Kommunikationspartner (10) und die Komponente (60) einen zweiten Kommunikationspartner (20) aufweist, wobei die Kommunikationspartner (10, 20) dazu ausgebildet sind, bei Eintritt eines Eintrittsereignisses bestimmte Informationen (30a) und regelmäßige Aktualisierungen (30b) der bestimmten Informationen (30a) auszutauschen, wenn zuvor einmalig eine Anfrage (40) von dem ersten Kommunikationspartner (10) an den zweiten Kommunikationspartner (20) gesendet wurde.

10. Verfahren zum regelmäßigen Austausch von Daten (30) zwischen einem ersten Kommunikationspartner (10) und einem zweiten Kommunikationspartner (20) in einer Werkzeugmaschine (50) nach Anspruch 9, wobei das Verfahren durch **folgende Schritte gekennzeichnet** wird:
a) einmalige Anfrage (40) des ersten Kommunikationspartners (10) an den zweiten Kommunikationspartner (20),
b) Übermittlung einer bestimmten Information (30a) von dem zweiten Kommunikationspartner (20) an den ersten Kommunikationspartner (10),
c) Übermittlung einer Aktualisierung (30b) der bestimmten Information (30a) von dem zweiten Kommunikationspartner (20) an den ersten Kommunikationspartner (10) bei Eintritt eines Eintrittsereignisses.

11. Verfahren nach Anspruch 10
**dadurch gekennzeichnet, dass**
die einmalige Anfrage (40) mindestens das mindestens eine Eintrittsereignis umfasst.

12. Verfahren nach Anspruch 10 oder 11
**dadurch gekennzeichnet, dass**
die Kommunikationspartner (10, 20) elektronische Steuervorrichtungen der Werkzeugmaschine (50) und/oder einer Komponente (60) der Werkzeugmaschine (50) sind.
